# EUROPÄISCHE PATENTANMELDUNG

(11) **EP 3 130 780 A1**
(43) Veröffentlichungstag der Anmeldung: **15.02.2017**
(21) Anmeldenummer: 15181087.6
(22) Anmeldetag: 14.08.2015
(51) Int. Cl.: F02C 6/02, F02C 7/36, F01D 13/00, F16D 48/00, F01D 19/00

(54) **VERFAHREN ZUM KUPPELN VON ZWEI TEILWELLEN**

(71) Anmelder: Siemens Aktiengesellschaft, 80333 München (DE)
(72) Erfinder: Winkel, Michael, 46284 Dorsten (DE)

(57) **Zusammenfassung**

Die Erfindung betrifft ein Verfahren zum Kuppeln einer ersten Teilwelle, die eine erste Strömungsmaschine und einen an ein Stromnetz angeschlossenen Generator aufweist, mit einer zweiten Teilwelle, die eine zweite Strömungsmaschine aufweist, mittels einer Überholkupplung, mit den Schritten:
a) Rotieren der zweiten Teilwelle mit einer Ausgangsdrehzahl, die niedriger ist als die Drehzahl der ersten Teilwelle;
b) Messen der Netzfrequenz (2) des Stromnetzes;
c) Messen eines Differenzwinkels zwischen der ersten Teilwelle und der zweiten Teilwelle;
d) Beschleunigen der zweiten Teilwelle mit einem Beschleunigungswert, der sich unter Heranziehen der in Schritt b) gemessenen Netzfrequenz (2), dem Differenzwinkel und der Ausgangsdrehzahl ergibt, so dass die Überholkupplung die beiden Teilwellen bei einem vorherbestimmten Zielkuppelwinkel miteinander kuppelt.

## Beschreibung

Ein Wellenstrang mit Strömungsmaschinen, wie beispielsweise in einem Kraftwerk, kann beim Rotieren des Wellenstrangs zu Schwingungen angeregt werden. Die Schwingungen des Wellenstrangs sind jedoch nachteilig, weil sie die Lebensdauer des Wellenstrangs verkürzen.

Der Wellenstrang kann mit Hilfe einer Kupplung in Teilwellen unterteilt werden, wobei die Teilwellen im entkuppelten Zustand unabhängig voneinander rotieren können und im gekuppelten Zustand zusammen rotieren. Beispielsweise kann eine Teilwelle eine Gasturbine aufweisen mit deren Abwärme eine Dampfturbine der anderen Teilwelle angetrieben wird. Beim Anfahren der Gasturbine steht noch nicht genug Abwärme zur Verfügung, um die Dampfturbine anzutreiben. Um Ventilation innerhalb der Dampfturbine zu unterbinden, werden herkömmlich die beiden Teilwellen erst miteinander gekuppelt, wenn die Teilwelle mit der Dampfturbine auf die Drehzahl der Teilwelle mit der Gasturbine beschleunigt wurde. Ebenfalls können beispielsweise in einem Dampf-/Wärmekraftwerk zwei Teilwellen mit jeweils einer Dampfturbine mittels einer Kupplung gekuppelt und entkuppelt werden. Bei einer Entnahme einer großen Menge an Dampf für eine Wärmeabgabe des Dampf-/Wärmekraftwerks können die Teilwellen entkuppelt werden, so dass eine der beiden Dampfturbinen nicht von Dampf durchströmt werden braucht.

Es hat sich herausgestellt, dass das Schwingungsverhalten des Wellenstrangs von dem Kuppelwinkel der beiden Teilwellen abhängt. Herkömmlich werden die beiden Teilwellen mehrfach entkuppelt und gekuppelt bis sich ein gewünschter Zielkuppelwinkel mit einer geringen Schwingungsbelastung einstellt. Dabei wird der gewünschte Zielkuppelwinkel jedoch nur per Zufall erreicht und dazu auch lediglich mit einer geringen Genauigkeit.

Objektive technische Aufgabe ist es daher ein Verfahren zum Kuppeln von zwei Teilwellen zu schaffen, bei denen ein gewünschter Zielkuppelwinkel der beiden Teilwellen zuverlässig und mit einer hohen Genauigkeit erreicht wird.

Das erfindungsgemäße Verfahren zum Kuppeln einer ersten Teilwelle, die eine erste Strömungsmaschine und einen an ein Stromnetz angeschlossenen Generator aufweist, mit einer zweiten Teilwelle, die eine zweite Strömungsmaschine aufweist, mittels einer Überholkupplung weist die Schritte auf: a) Rotieren der zweiten Teilwelle mit einer Ausgangsdrehzahl, die niedriger ist als die Drehzahl der ersten Teilwelle; b) Messen der Netzfrequenz des Stromnetzes; c) Messen eines Differenzwinkels zwischen der ersten Teilwelle und der zweiten Teilwelle; d) Beschleunigen der zweiten Teilwelle mit einem Beschleunigungswert, der sich unter Heranziehen der in Schritt b) gemessenen Netzfrequenz, dem Differenzwinkel und der Ausgangsdrehzahl ergibt, so dass die Überholkupplung die beiden Teilwellen bei einem vorherbestimmten Zielkuppelwinkel miteinander kuppelt.

Mittels der Überholkupplung erfolgt das Kuppeln der beiden Teilwellen, wenn die zweite Teilwelle in Schritt d) auf Drehzahlen beschleunigt wird, die höher als die Drehzahl der ersten Teilwelle sind. Mit dem erfindungsgemäßen Verfahren kann der vorherbestimmte Zielkuppelwinkel vorteilhaft zuverlässig und mit einer hohen Genauigkeit erreicht werden. Der Zielkuppelwinkel wird dabei derart vorbestimmt, dass die Schwingungen im Betrieb der gekuppelten Teilwellen möglichst gering sind. Dazu können beispielsweise die Schwingungen für verschiedene Zielkuppelwinkel rechnerisch bestimmt werden, insbesondere mittels einer Finiten Elemente Methode, und dann der Zielkuppelwinkel ausgewählt werden, bei dem die geringste Spannungsbelastung der beiden gekuppelten Teilwellen auftritt. Ebenso ist denkbar, dass die Schwingungen bei verschiedenen Zielkuppelwinkeln experimentell bestimmt werden und aus den experimentellen Daten derjenige Zielkuppelwinkel ausgewählt wird, bei dem die geringste Spannungsbelastung auftritt.

Bevorzugt weist das Verfahren die Schritte auf: e) Messen einer neuen Netzfrequenz während dem Beschleunigen der zweiten Teilwelle; f) in dem Fall, dass die neue Netzfrequenz verschieden von der in Schritt b) gemessenen Netzfrequenz ist, Beschleunigen der zweiten Teilwelle mit einem geänderten Beschleunigungswert, der sich unter Heranziehen der neuen Netzfrequenz ergibt. Dadurch können vorteilhaft Schwankungen der Netzfrequenz und damit Schwankungen der Drehzahl der ersten Teilwelle, welche während dem Kuppeln der beiden Teilwellen auftreten, vorteilhaft ausgeglichen werden, wodurch der vorherbestimmte Zielkuppelwinkel mit einer besonders hohen Genauigkeit erreicht werden kann. Zum Bestimmen des geänderten Beschleunigungswerts können zusätzlich zu der neuen Netzfrequenz die Drehzahl der zweiten Teilwelle und ein neuer Differenzwinkel herangezogen werden, die zu dem Zeitpunkt vorliegen, an dem die neue Netzfrequenz gemessen wird. Für die Drehzahl der zweiten Teilwelle können beispielsweise eine gemessene Drehzahl oder ein Sollwert einer Drehzahlregelung der zweiten Teilwelle eingesetzt werden. Es ist bevorzugt, dass das Verfahren den Schritt aufweist: g) mindestens einmaliges Wiederholen der Schritte e) und f), insbesondere kontinuierliches Wiederholen der Schritte e) und f). Dadurch kann die Genauigkeit, mit der der vorherbestimmte Zielkuppelwinkel erreicht wird, noch weiter erhöht werden.

Es ist bevorzugt, dass die Netzfrequenz elektrisch und/oder durch Messen der Drehzahl des ersten Teilstrangs gemessen wird. Besonders das elektrische Messen stellt ein einfaches Verfahren zum Messen der Netzfrequenz dar.

Das Verfahren weist bevorzugt die Schritte auf: b1) Bilden einer Differenz zwischen der Netzfrequenz und einer Sollnetzfrequenz; c1) Bestimmen eines Beschleunigungsausgangswerts unter Heranziehen des Differenzwinkels, der Ausgangsdrehzahl und der Sollnetzfrequenz; wobei in Schritt d) der Beschleunigungswert unter Heranziehen des Beschleunigungsausgangswerts und der Differenz bestimmt wird. Durch diese Verfahrensschritte wird der Beschleunigungsausgangswert für den Fall berechnet, dass die Netzfrequenz nicht von der Sollnetzfrequenz abweicht. Durch Bilden der Differenz lassen sich Abweichungen der Netzfrequenz von der Sollnetzfrequenz besonders leicht erkennen. Die Abweichungen können unter Heranziehen der Differenz korrigiert werden, was vorteilhaft ein einfaches und wenig rechenaufwändiges Verfahren darstellt.

Alternativ ist es bevorzugt, dass Schritt d) durchgeführt wird, sobald der in Schritt c) gemessene Differenzwinkel gleich einem Solldifferenzwinkel wird. Somit wird die zweite Teilwelle so lange bei der Ausgangsdrehzahl geparkt bis sich der Solldifferenzwinkel einstellt. Bevorzugt wird dann das Verfahren mit den Schritten durchgeführt: b1) Bilden einer Differenz zwischen der Netzfrequenz und einer Sollnetzfrequenz; c1) Bestimmen eines Beschleunigungsausgangswerts unter Heranziehen des Solldifferenzwinkels, der Ausgangsdrehzahl und der Sollnetzfrequenz; wobei in Schritt d) der Beschleunigungswert unter Heranziehen des Beschleunigungsausgangswerts und der Differenz bestimmt wird. Weil der Beschleunigungsausgangswert nur einmal für den Solldifferenzwinkel berechnet wird, stellt dies ein rechnerisch besonders einfaches Verfahren dar.

Es ist bevorzugt, dass die Ausgangsdrehzahl und der Beschleunigungswert als Sollwerte in einen Drehzahlregelung der zweiten Teilwelle eingegeben werden. Es ist bevorzugt, dass die erste Strömungsmaschine eine Gasturbine und die zweite Strömungsmaschine eine Dampfturbine ist. Alternativ ist bevorzugt, dass die erste Strömungsmaschine eine Dampfturbine und die zweite Strömungsmaschine eine Dampfturbine ist.

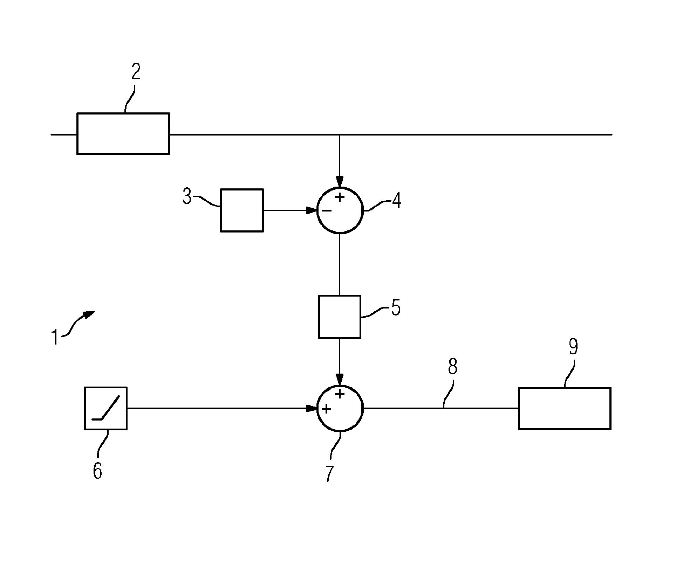

Im Folgenden wird anhand der beigefügten schematischen Zeichnung die Erfindung näher erläutert. Die Figur zeigt eine Logik zum Durchführen des Verfahrens.

Bei dem Verfahren wird eine erste Teilwelle, die eine erste Strömungsmaschine und einen an ein Stromnetz angeschlossenen Generator aufweist, mit einer zweiten Teilwelle gekuppelt, die eine zweite Strömungsmaschine aufweist. Zum Kuppeln wird eine Überholkupplung eingesetzt, die die beiden Teilwellen miteinander kuppelt, wenn die zweite Teilwelle auf Drehzahlen beschleunigt wird, die höher als die Drehzahl der ersten Teilwelle ist. Beispielsweise kann die erste Strömungsmaschine eine Gasturbine und die zweite Strömungsmaschine eine Dampfturbine sein. In einem anderen Beispiel kann die erste Strömungsmaschine eine Dampfturbine und die zweite Strömungsmaschine eine Dampfturbine sein. Es ist ebenso denkbar, dass die erste Teilwelle eine Mehrzahl an Strömungsmaschinen und/oder die zweite Teilwelle eine Mehrzahl an Strömungsmaschinen aufweist.

Um das Verfahren zu veranschaulichen ist in der Figur eine Logik 1 zum Durchführen des Verfahrens dargestellt. Zunächst wird die zweite Teilwelle mit einer Ausgangsdrehzahl rotiert, die niedriger als die Drehzahl der ersten Teilwelle ist. Die Ausgangsdrehzahl kann etwa von 0,5 Hz bis 1,5 Hz, insbesondere von 0,9 Hz bis 1,1 Hz niedriger als eine Sollnetzfrequenz sein. Dadurch ist gewährleistet, dass auch bei typischerweise auftretenden Schwankungen der Drehzahl der ersten Teilwelle die zweite Teilwelle bei der Ausgangsdrehzahl langsamer als die erste Teilwelle ist. Die Sollnetzfrequenz 3 beträgt beispielsweise 50 Hz oder 60 Hz. Die Ausgangsdrehzahl kann als ein Sollwert in eine Drehzahlregelung 9 der zweiten Teilwelle eingegeben werden.

Wie es aus der Figur ersichtlich ist, wird die Netzfrequenz 2 des Stromnetzes gemessen. Dies kann elektrisch oder durch Messen der Drehzahl der ersten Teilwelle erfolgen. Anschließend wird eine Differenz 4 zwischen der Netzfrequenz 2 und der Sollnetzfrequenz 3 des Stromnetzes gebildet. Die Differenz 4 wird in einem Verarbeitungsschritt 5 weiter verarbeitet. Beispielsweise kann ein Skalierung, eine Offsetverschiebung oder eine Integration der Differenz durchgeführt werden. Außerdem wird ein Beschleunigungsausgangswert 6 bestimmt, der sich unter Heranziehen der Ausgangsdrehzahl und der Sollnetzfrequenz ergibt. Unter Heranziehen des Beschleunigungsausgangswerts 6 wird ein Drehzahlsollwert berechnet. Zum Bestimmen des Drehzahlsollwerts wird weiterhin die Dauer von einem Beschleunigungsstartzeitpunkt verwendet. Um einen passenden Beschleunigungsstartzeitpunkt zum Beschleunigen der zweiten Teilwelle zu finden, kann die zweite Teilwelle so lange bei der Ausgangsdrehzahl gehalten werden, bis der Differenzwinkel gleich einem Solldifferenzwinkel wird. In diesem Fall wird zum Bestimmen des Beschleunigungsausgangswerts 6 auch der Solldifferenzwinkel herangezogen. Alternativ kann die zweite Teilwelle bei einem beliebigen Beschleunigungsstartzeitpunkt beschleunigt werden. In diesem Fall wird zum Bestimmen des Beschleunigungsausgangswerts 6 auch der bei dem beliebigen Zeitpunkt gemessene Differenzwinkel herangezogen.

Der Beschleunigungsausgangswert 6 kann beispielsweise experimentell bestimmt werden. Dazu kann der bei einem Einkuppelvorgang überstrichene Winkel zwischen der ersten Teilwelle und der zweiten Teilwelle sowie die Netzfrequenz zeitaufgelöst gemessen werden. Aus den während dem Einkuppelvorgang auftretenden Abweichungen der Netzfrequenz von der Sollnetzfrequenz und dem überstrichenen Winkel kann auf den Beschleunigungsausgangswert 6 zurückgeschlossen werden.

Der Drehzahlsollwert wird in einem Korrekturschritt 7 mit der in dem Verarbeitungsschritt 5 verarbeiteten Differenz korrigiert, wodurch sich ein korrigierter Drehzahlsollwert 8 ergibt. Beispielsweise kann in dem Verarbeitungsschritt 5 die Differenz mit einem Faktor 1 multipliziert werden und in dem Korrekturschritt 7 die Differenz mit dem Drehzahlsollwert addiert werden, wodurch der korrigierte Drehzahlsollwert 8 gebildet wird. Dies kann beispielsweise kontinuierlich erfolgen. Der korrigierte Drehzahlsollwert 8 wird als ein Sollwert in die Drehzahlregelung 9 der zweiten Teilwelle eingegeben, so dass die zweite Teilwelle beschleunigt und die beiden Teilwellen miteinander gekuppelt werden.

Es ist denkbar, dass eine neue Netzfrequenz während dem Beschleunigen der zweiten Teilwelle gemessen wird. In dem Fall, dass die neue Netzfrequenz verschieden ist von der vorher gemessenen Netzfrequenz, wird die zweite Teilwelle mit einem geänderten Beschleunigungswert beschleunigt, der sich unter Heranziehen der neuen Netzfrequenz ergibt. Weiterhin werden die Drehzahl der zweiten Teilwelle und ein neuer Differenzwinkel herangezogen, die zu dem Zeitpunkt vorliegen, an dem die neue Netzfrequenz gemessen wird. Für die Drehzahl können die Solldrehzahl aus der Drehzahlregelung oder eine gemessene Drehzahl herangezogen werden. Weiterhin ist denkbar, dass dies mehrfach beim Beschleunigen der zweiten Teilwelle oder kontinuierlich beim Beschleunigen der zweiten Teilwelle durchgeführt wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Kuppeln einer ersten Teilwelle, die eine erste Strömungsmaschine und einen an ein Stromnetz angeschlossenen Generator aufweist, mit einer zweiten Teilwelle, die eine zweite Strömungsmaschine aufweist, mittels einer Überholkupplung, mit den Schritten:
a) Rotieren der zweiten Teilwelle mit einer Ausgangsdrehzahl, die niedriger ist als die Drehzahl der ersten Teilwelle;
b) Messen der Netzfrequenz (2) des Stromnetzes;
c) Messen eines Differenzwinkels zwischen der ersten Teilwelle und der zweiten Teilwelle;
d) Beschleunigen der zweiten Teilwelle mit einem Beschleunigungswert, der sich unter Heranziehen der in Schritt b) gemessenen Netzfrequenz (2), dem Differenzwinkel und der Ausgangsdrehzahl ergibt, so dass die Überholkupplung die beiden Teilwellen bei einem vorherbestimmten Zielkuppelwinkel miteinander kuppelt.

2. Verfahren gemäß Anspruch 1,
mit den Schritten:
e) Messen einer neuen Netzfrequenz während dem Beschleunigen der zweiten Teilwelle;
f) in dem Fall, dass die neue Netzfrequenz verschieden von der in Schritt b) gemessenen Netzfrequenz ist, Beschleunigen der zweiten Teilwelle mit einem geänderten Beschleunigungswert, der sich unter Heranziehen der neuen Netzfrequenz ergibt.

3. Verfahren gemäß Anspruch 2,
mit dem Schritt:
g) mindestens einmaliges Wiederholen der Schritte e) und f), insbesondere kontinuierliches Wiederholen der Schritte e) und f).

4. Verfahren gemäß einem der Ansprüche 1 bis 3, wobei die Netzfrequenz (2) elektrisch und/oder durch Messen der Drehzahl des ersten Teilstrangs gemessen wird.

5. Verfahren gemäß einem der Ansprüche 1 bis 5, mit den Schritten:
b1) Bilden einer Differenz (4) zwischen der Netzfrequenz (2) und einer Sollnetzfrequenz (3);
c1) Bestimmen eines Beschleunigungsausgangswerts (6) unter Heranziehen des Differenzwinkels, der Ausgangsdrehzahl und der Sollnetzfrequenz;
wobei in Schritt d) der Beschleunigungswert unter Heranziehen des Beschleunigungsausgangswerts (6) und der Differenz (4) bestimmt wird.

6. Verfahren gemäß einem der Ansprüche 1 bis 4,
wobei Schritt d) durchgeführt wird, sobald der in Schritt c) gemessene Differenzwinkel gleich einem Solldifferenzwinkel wird.

7. Verfahren gemäß Anspruch 6, mit den Schritten:
b1) Bilden einer Differenz (4) zwischen der Netzfrequenz (2) und einer Sollnetzfrequenz (3);
c1) Bestimmen eines Beschleunigungsausgangswerts (6) unter Heranziehen des Solldifferenzwinkels, der Ausgangsdrehzahl und der Sollnetzfrequenz;
wobei in Schritt d) der Beschleunigungswert unter Heranziehen des Beschleunigungsausgangswerts (6) und der Differenz bestimmt wird.

8. Verfahren gemäß einem der Ansprüche 1 bis 7,
wobei die Ausgangsdrehzahl und der Beschleunigungswert als Sollwerte in eine Drehzahlregelung der zweiten Teilwelle eingegeben werden.

9. Verfahren gemäß einem der Ansprüche 1 bis 8,
wobei die erste Strömungsmaschine eine Gasturbine und die zweite Strömungsmaschine eine Dampfturbine ist.

10. Verfahren gemäß einem der Ansprüche 1 bis 8,
wobei die erste Strömungsmaschine eine Dampfturbine und die zweite Strömungsmaschine eine Dampfturbine ist.
